# EUROPEAN PATENT APPLICATION

(11) **EP 3 282 402 A1**
(43) Date of publication of application: **14.02.2018**
(21) Application number: 16183909.7
(22) Date of filing: 12.08.2016
(51) Int. Cl.: G06Q 10/00, G06Q 30/00, G06Q 30/06

(54) **MERCHANDISE ANTI-COUNTERFEITING AND AUTHENTICATION METHOD AND THE NON-TRANSITORY COMPUTER READABLE MEDIUM THEREOF**

(71) Applicant: Wu, Mao-Chun, Kaohsiung City 804 (TW)
(72) Inventor: Wu, Mao-Chun, Kaohsiung City 804 (TW)
(74) Representative: Cabinet Chaillot

(57) **Abstract**

The present disclosure relates to a merchandise anti-counterfeiting and authentication method and a non-transitory computer readable medium thereof that depend on a legal tag reader device in a retail shop for a product transaction to read a chip-based tag on a product and transmit product identity information in the chip-based tag, the tag reader device's device identity information and a consumer's user identity information to an authentication server in which the product identity information and the tag reader device's device identity information is authenticated and the consumer's user identity information is saved. When the chip-based tag is read by the tag reader device later, an authentication request to check authenticity of a product will be sent to a consumer by the authentication server according to the consumer's identity information.

## Description

### BACKGROUND OF THE INVENTION

### 1. Field of the invention

The present disclosure relates to an anti-counterfeiting and authentication method and the non-transitory computer readable medium thereof, particularly a merchandise anti-counterfeiting and authentication method and the non-transitory computer readable medium thereof to read a tag mounted on an object and enable multi-authentication for authenticating the genuineness of the object.

### 2. Description of the prior art

In transactions rife with rampant counterfeits, an impartial third party who guarantees authenticity of transacted products between traders will protect the value of products and turnover effectively. Therefore, an effective merchandise anti-counterfeiting and authentication method is a rare and practical technique.

There have been several authentication methods for transactions of products existing in the prior art. Amid these methods, an authentication method, which is used to read information in a tag mounted on a product and check the information with authentic tag information in a database, is an anti-counterfeiting technique featuring low cost and high efficiency. These methods, however, still have drawbacks in practice.

To protect reliability of an authentication method which depends on tag information only from challenge, a technique with more information for authentication saved in a database or collected from multiple sources has been adopted by some prior arts in addition to information saved in a tag.

Amid the methods with different types of information added for authentication, the cited references in the patent applications CN201410006029, CN201410006030 and CN201410006048 disclose a method for anti-counterfeiting, registration, authentication and ownership transfer of artwork based on Near Field Communication (NFC) particularly. In the three patent applications, the patent applicant used an identical method which saves information such as user ID, tag ID, artwork ID, artwork information, first anti-counterfeiting token, and second anti-counterfeiting token in three devices including anti-counterfeiting tag, anti-counterfeiting cell phone and anti-counterfeiting server, three of which check one another but maintain interconnection for valid information of registration, authentication and ownership transfer with data in the anti-counterfeiting tag, the anti-counterfeiting cell phone and the anti-counterfeiting server updated simultaneously.

Despite the communication is held between a user holding an anti-counterfeiting cell phone and a server in the method above; however, data written in the anti-counterfeiting tag can be freely rewritten or obtained by the very owner of the cell phone or any vicious third party, who retrieved the anti-counterfeiting token, through the anti-counterfeiting cell phone. Therefore, the counter party in a transaction is hard to be persuaded by this method since the anti-counterfeiting cell phone for registration or ownership transfer possessed by the cell phone owner is not formally authenticated by any impartial third party. Thus, the drawback of cited references in the three patent applications is not in accord with the original intention of authenticating a valuable product in a transaction.

### SUMMARY OF THE INVENTION

Present invention provides an anti-counterfeiting and authentication method and the non-transitory computer readable medium thereof, which is applied between a tag reader device and a chip-based tag mounted on an object without drawbacks of conventional techniques.

In the merchandise anti-counterfeiting and authentication method and the non-transitory computer readable medium thereof, the chip-based tag in which product identity information, encrypted or unencrypted optionally, such as a product's unique True ID or a product manufacturer's or seller's Brand ID is saved can be mounted on a single object, regarded as an identity tag of a product, and classified as an NFC (Near Field Communication) chip, a RFID (Radio Frequency Identification) chip or a QR (Quick Response Code) chip.

In the merchandise anti-counterfeiting and authentication method and the non-transitory computer readable medium thereof, the product identity information such as a product's True ID or a product manufacturer's or seller's Brand ID is compiled by a product manufacturer or a legal product seller, saved in a database of an authentication server, and taken as product history of a product.

Moreover, the tag reader device is a legal authentication device which is owned by a product seller or used in a retail shop of the product seller and assigned unique device identity information. The tag reader device is used to read the chip-based tag mounted on an object to recognize the authenticity of a product. Correspondingly, the tag reader device is used to read a NFC chip, a RFID chip or a QR chip.

The tag reader device can be provided to a logistics service provider or a warehouse manager, each of whom manages parts of the logistic process of the product. When the chip-based tag mounted on an object is read by the tag reader device for warehousing of a product in the logistic process, the device identity information of the tag reader device is recorded in a database of the authentication server simultaneously and taken as product history of a product.

In the merchandise anti-counterfeiting and authentication method and the non-transitory computer readable medium thereof, the steps executed by the tag reader device for authentication or user identity information change are:
The tag reader device reading the chip-based tag to obtain the product identity information saved in the chip-based tag for staring the process of authentication;
The tag reader sending the identity information of the product, the device identity information of the tag reader device, and a user identity information to the authentication server, wherein the user identity information can be entered with tag reader device; and
the tag reader device receiving an positive authenticating message which stands for completion of the authentication process, wherein the positive authenticating message is derived from the following procedure: the authentication server checks the product identity information is genuine and verifies the device identity information matches a legal device; the authentication server correlating the user identity information and the device identity information with the product identity information and having them saved in a database; the authentication server sending an positive authenticating message to the tag reader device.

The aforementioned user identity information could be the e-mail box, cell phone number or an account of the Google Authenticator of the user.

According to the above steps, the tag reader device in the merchandise anti-counterfeiting and authentication method reads the chip-based tag to generate a relationship between a product and a user in a transaction process of a product sold in a dealer's retail shop. With an authentication process conducted by the tag reader device completely, a product on which the chip-based tag is mounted can be trusted as a genuine product rather than a counterfeit since its authenticity is confirmed by the original manufacturer and a legal dealer.

When the product which was authenticated in the aforementioned authentication process through the tag reader device needs to be sold or transferred in a transaction, the following procedure can be executed by the tag reader device to ensure the genuineness of the product: one of the legal tag reader device reading the chip-based tag for staring a process of re-authentication; the tag reader device sending both the product identity information and the device identity information to the authentication server for verification; the tag reader device sending an authentication request based on the user identity information saved in a database to a user end, for example, a dynamic authentication request is forwarded to a user's cellphone according to the user's phone number; the tag reader device receiving a positive re-authenticating message for completing the re-authentication process, wherein the positive re-authenticating message is sent to the tag reader device when an affirmative reply to the authentication request from the user is received by the authentication server. As such, a product on which the chip-based tag is mounted can be trusted as a genuine product rather than a counterfeit in the transaction since the product history from the original manufacturer or the legal dealer can be confirmed.

In present merchandise anti-counterfeiting and authentication method, the product identity information can only be bound to unique user identity information. Thus, when the positive re-authenticating message is received by the tag reader device, the tag reader device then can send an identity information editing request to the authentication server according to a new user identity information. When the authentication server replied the tag reader device with an editing success message, the process is over. Wherein the editing success message is sent by the authentication server for the authentication server has successfully updated the original user identity information with the new user identity information. The correlation between the original identity information and the product identity information would be cancelled by the authentication server.

In present merchandise anti-counterfeiting and authentication method, optionally, the user end and the tag reader device could be the same device. Therefore, the tag reader device could be the device which received the authentication request in the process of re-authentication. When one party in the transaction challenges the reliability of the authentication process based on cell phones in a transaction, both parties in the transaction can only trust a credible third party's tag reader device installed in a retail shop to read the electronic tag on a product, reply to a corresponding authentication request, and change user identity information in front of them. As such, both parties in the transaction can be confident to the impartiality of the transaction and the genuineness of the product with neither cell phones nor personal devices required.

Present invention also disclosed a non-transitory computer readable medium containing program instructions, which can be installed in the tag reader device or any intermediate connected with the tag reader, for causing the tag reader device to execute the steps of aforementioned anti-counterfeiting and authentication method, comprising:
Steps of authentication:
   Reading the chip-based tag for obtaining product identity information saved in the chip-based tag and activating the process of authentication;
   Sending the product identity information of the product, a device identity information of the tag reader device which is unique, and an user identity information to an authentication server; and
   Receiving an positive authenticating message and completing the process of authentication, wherein the positive authenticating message is sent by the authentication server when the authentication server correctly authenticating the genuineness of the product identity information and the device identity information then saving the user identity information correlating with the product identity information.

Steps of re-authentication:
Reading the chip-based tag again for activating a process of re-authentication, wherein the authentication server re-authenticating the genuineness of the product identity information and the device identity information then sending an authentication request to an user end according to the user identity information; and
Receiving a positive re-authenticating message and completing the process of re-authentication, the positive re-authenticating is sent by the authentication server when the authentication server receiving an affirmative reply of the authentication request from the user end.

Steps of identity editing request:
Activating an identity information editing request based on a new user identity information after the process of re-authentication is complete; and
Receiving an editing success message, wherein the editing success message is sent by the authentication server after the authentication server receiving the identity information editing request and updating the correlation between the product identity information and the user identity information with the new user identity information.

In summary, the merchandise anti-counterfeiting and authentication method in the present disclosure contributes to a product transaction in which the chip-based tag on the product is read with the legal tag reader device installed in a dealer's retail shop, the product is sold and transferred by a product owner, the authenticity of a purchasable product is confirmed by a dealer or in a retail shop, and the original user identity information bound to the product is changed, promoting the ownership transfer efficiently as expected.

### BRIEF DESCRIPTION OF THE DRAWINGS

FIG. 1 is the first schematic diagram illustrating a situation of executing the merchandise anti-counterfeiting and authentication method in an embodiment;
FIG. 2 is the second schematic diagram illustrating a situation of executing the merchandise anti-counterfeiting and authentication method in an embodiment;
FIG. 3 is the third schematic diagram illustrating a situation of executing the merchandise anti-counterfeiting and authentication method in an embodiment;
FIG. 4 is the fourth schematic diagram illustrating a situation of executing the merchandise anti-counterfeiting and authentication method in an embodiment;
FIG. 5 illustrates the steps of executing the merchandise anti-counterfeiting and authentication method in an authentication process;
FIG. 6 illustrates the steps of executing the merchandise anti-counterfeiting and authentication method in a re-authentication process;

### DETAILED DESCRIPTION OF THE PREFERRED EMBODIMENT

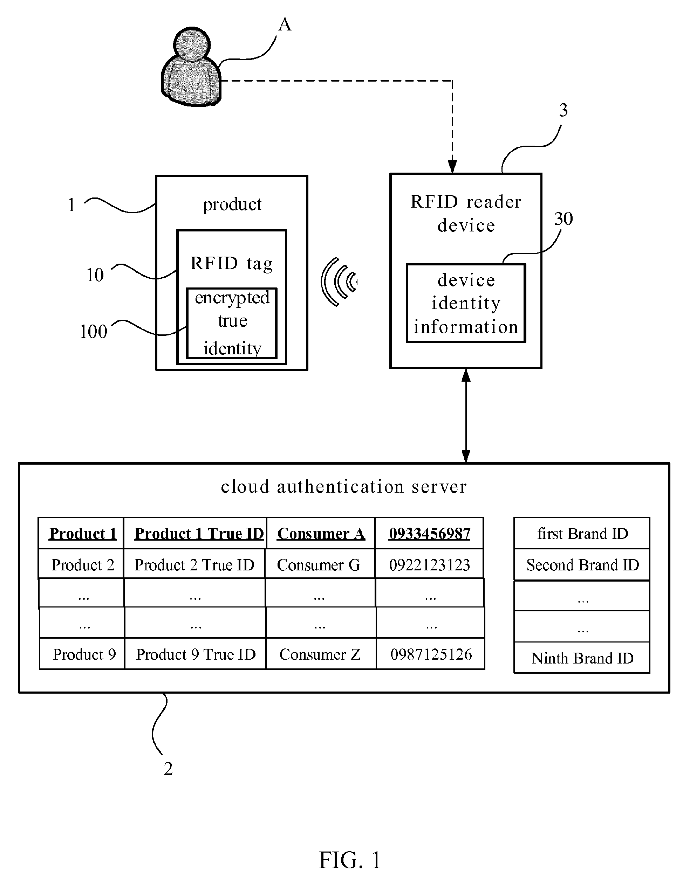

The present invention of the merchandise anti-counterfeiting and authentication method and the non-transitory computer readable medium thereof will be described in embodiments with figures hereinafter. Referring to FIG. 1, which is the first schematic diagram illustrating a situation of executing the merchandise anti-counterfeiting and authentication method in an embodiment.

As shown in FIG. 1, a product 1 fabricated or assembled by a qualified manufacturer is given a True ID, for example, a unique 10-byte True ID which is compiled according to manufacturing data such as brand, manufacturer, model, production line, packer, shipping date, etc. and stands for the complete identity of the product 1.

Moreover, a dealer selling the product 1 is given a Brand ID, for example, a four-byte first Brand ID which is generated by a random number generator and a unique and non-repeated code number correctly representing a first dealer's identity.

For a product's identity can be correctly recognized, the product 1 in present invention is provided with an electronic tag in which the True ID of the product 1 is saved, for example, a RFID (Radio Frequency Identification) tag 10 invisibly mounted on the product 1 in the embodiment comprises the True ID of the product 1 symmetrically encrypted and burned onto the RFID tag 10. In this regard, a product's 10-byte True ID processed with AES (Advanced Encryption Standard) is encrypted to a 48-byte encrypted true identity 100 which is further burned onto the RFID tag 10 for configuring the RFID tag 10 as "read only".

In the merchandise anti-counterfeiting and authentication method of present invention, a cloud authentication server 2 stores the product's all data to be protected by the method such as an unencrypted True ID of the product 1 and a dealer's first Brand ID related to the product 1, both of which are recorded as legal product history of the product 1.

A logistics service provider delivers the product 1 to the dealer's legal retail shop to which a legal RFID reader device 3 with device identity information 30 therein is given. As a 6-byte identity code number, the device identity information 30, which is correlated with the corresponding Brand ID and saved in the cloud authentication server 2, will be erased from the cloud authentication server 2 if the RFID reader device 3 is lost in the embodiment; new device identity information 30 will be updated to and saved in the cloud authentication server 2 when a new RFID reader device 3 in which the new device identity information 30 is assigned is given to the legal retail shop.

In the embodiment, when a consumer A intends to purchase the product 1 in the legal retail shop, a salesclerk of the legal retail shop uses the RFID reader device 3 to read the encrypted true identity 100 saved in the RFID tag 10 on the product 1 and queries the consumer A about user identity information such as his/her identity information and cell phone number to be entered into the RFID reader device 3. Then, the encrypted true identity 100 saved in the RFID tag 10, the device identity information 30 of the RFID reader device 3, and user identity information of the consumer A including identity information and cell phone number are delivered to the cloud authentication server 2 for authentication.

An authentication process is activated by the cloud authentication server 2 which received the above information. With the dealer's first Brand ID derived from the device identity information 30, the cloud authentication server 2 deciphers the encrypted true identity 100 saved in the RFID tag 10 for a decrypted True ID of the product 1 which is to be checked for existence of the True ID of the product 1 in a database and authenticity of the product 1. The cloud authentication server 2 creates user identity information of the consumer A, identity information and cell phone number (for example, 0933456987), as user identity information which is further correlated with the True ID of the product 1 and saved. As such, the True ID of the product 1 and the user identity information are saved in the cloud authentication server 2 and the RFID reader device 3 which received a message of positive authentication indicates the consumer A that authentication is completed.

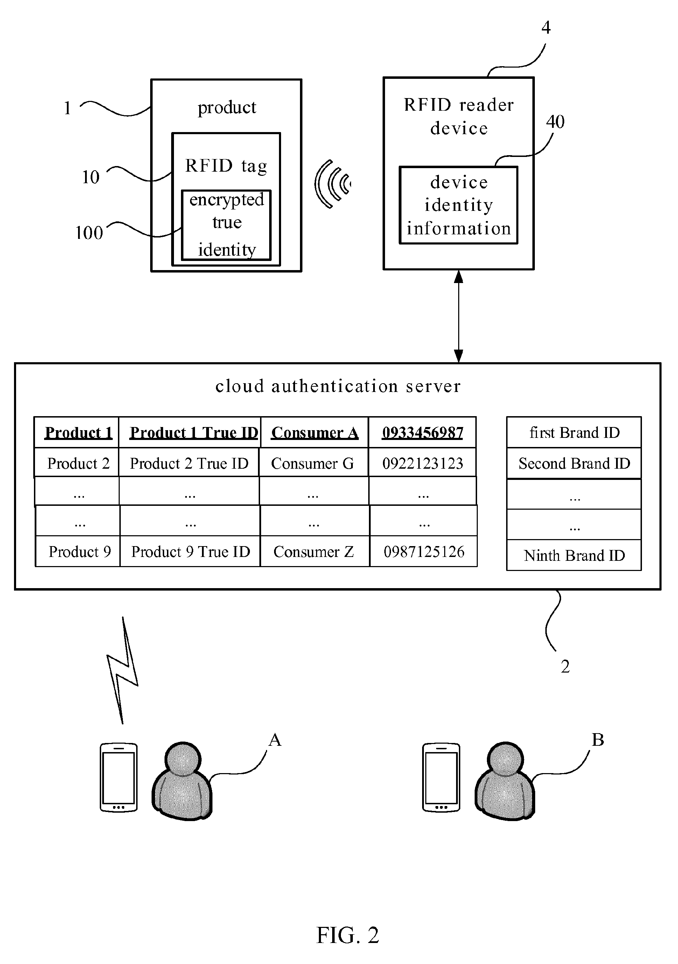

Referring to FIG. 2, which is the second schematic diagram illustrating a situation of executing the merchandise anti-counterfeiting and authentication method. As show in FIG. 2, the consumer A, who intends to sell the product 1 to a consumer B after several years, and the consumer B bring the product 1 to a salesclerk in another retail shop of the same dealer. The salesclerk uses another legal RFID reader device 4 in the retail shop to read the encrypted true identity 100 in the RFID tag 10 on the product 1. Then, the device identity information 40 of the RFID reader device 4 is delivered to the cloud authentication server 2.

The cloud authentication server 2, which derived the dealer's first Brand ID after checking the device identity information 40 of the RFID reader device 4, deciphers the encrypted true identity 100 based on the first Brand ID to catch the True ID of the product 1 for comparison. Then, the cloud authentication server 2 verifies the True ID of the product 1 exists in the database but is bound to the current owner' user identity information including identity information and cell phone number of the consumer A.

The cloud authentication server 2 issues a short message with a dynamic authentication request, for example, which should be affirmatively replied within two minutes, to a cell phone (e.g., cell phone number 0933456987) of the consumer A in the retail shop. With the short message received by the cell phone of the consumer A, the consumer A should read the dynamic authentication request and reply to the cloud authentication server 2 correctly. Then, the cloud authentication server 2, which received and checked an affirmative reply of the consumer A to the dynamic authentication request, issues a positive re-authentication message to the RFID reader device 4 in the retail shop at which the consumer A and the consumer B realize the product 1 to be transacted is a dealer-authenticated product with complete product history through the RFID reader device 4.

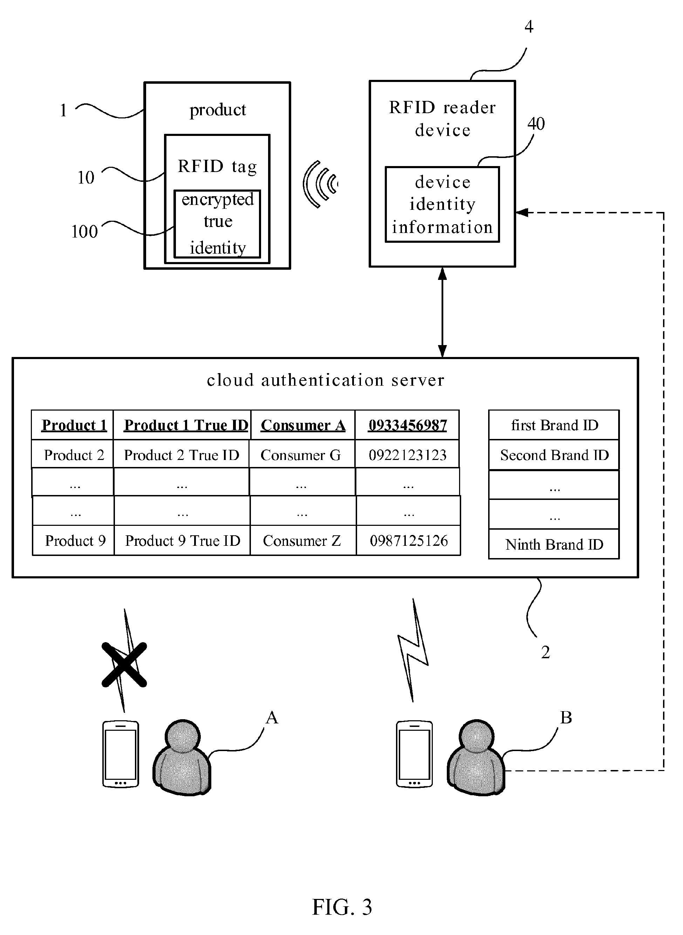

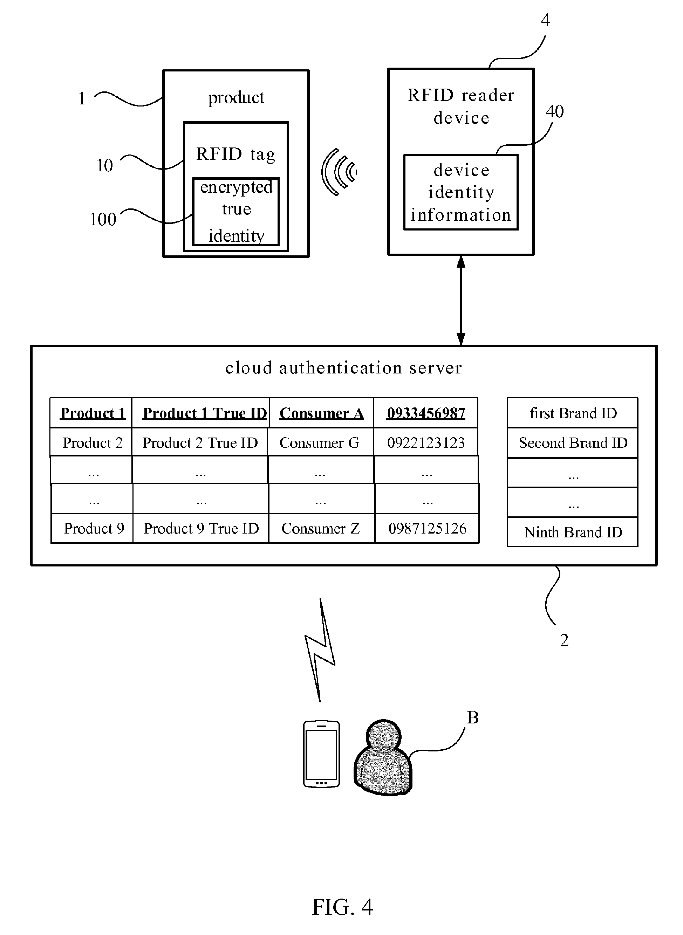

Referring to FIG. 3, which is the third schematic diagram illustrating a situation of executing the merchandise anti-counterfeiting and authentication method. As shown in FIG. 3, the consumer B, who is aware of the genuineness of the product 1 and agrees to make a transaction with the consumer A, issues an identity information editing request within a certain period of time to the cloud authentication server 2 through the RFID reader device 4 after the re-authentication for updating user identity information in the database from the consumer A to the consumer B. The cloud authentication server 2 receiving the identity information editing request updates user identity information of the consumer B such as identity information and cell phone number as described in the identity information editing request and the correlation between new user identity information and the True ID of the product 1, canceling user identity information of the consumer A and the correlation between user identity information of the consumer A and the True ID of the product 1; in the future, a short message with a dynamic authentication request therein issued by the cloud authentication server 2 for re-authentication will be received by a cell phone of the consumer B rather than the consumer A, as shown in FIG. 4 for the fourth schematic diagram. It can be seen from the merchandise anti-counterfeiting and authentication method in the present disclosure that authenticity of a product is verified by a third-party dealer for consumers in a transaction.

In another embodiment of the merchandise anti-counterfeiting and authentication method and the non-transitory computer readable medium thereof, there is no need to activate an authentication process via a cell phone of the consumer A or the consumer B. In the embodiment, with the RFID tag 10 on the product 1 correctly read by the RFID reader device 4 and authenticated by the cloud authentication server 2, a dynamic authentication request which should be replied within a certain period of time is sent to the RFID reader device 4 and displayed to the consumer A or the consumer B by a salesclerk in a retail shop for reply to the cloud authentication server 2. Then, the cloud authentication server 2, which received and checked affirmative reply to the dynamic authentication request, issues a message of positive re-authentication to the RFID reader device 4 in which the re-authentication process is completed independently and a follow-up identity information editing request to the cloud authentication server 2 within a certain period of time is activated. As such, the consumer A or the consumer B can make an authentic transaction through the RFID reader device 4 of a third party in a retail shop.

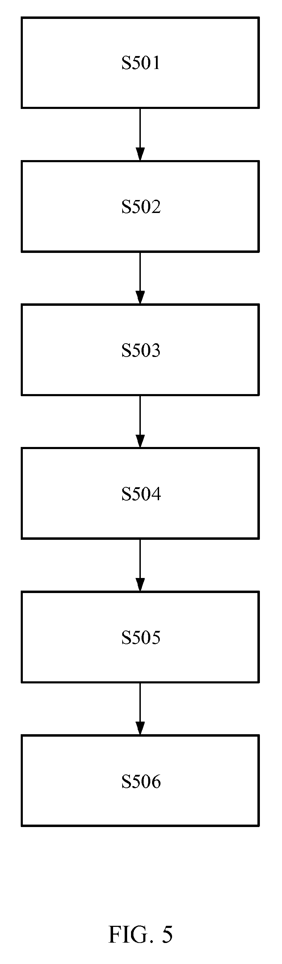

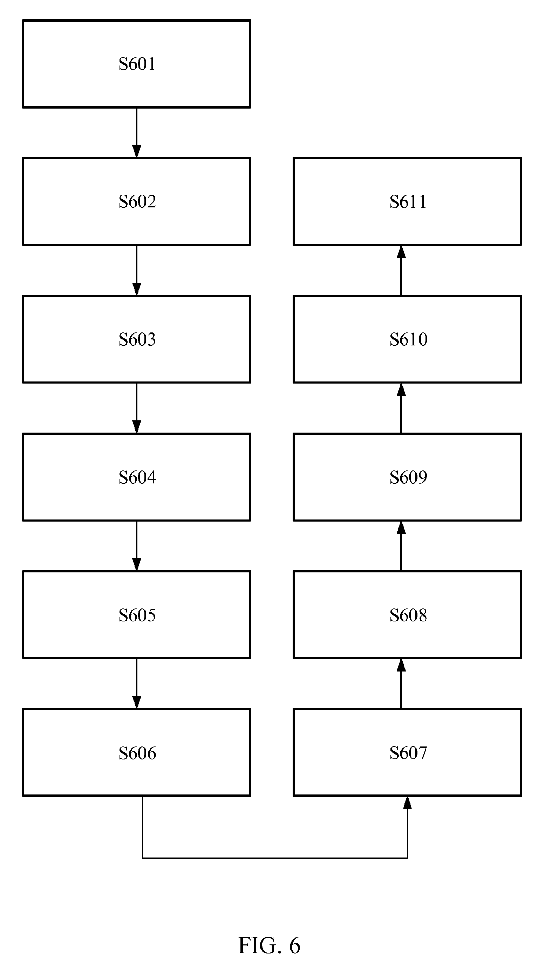

The merchandise anti-counterfeiting and authentication method, as described in embodiments from FIG. 1 to FIG. 4, comprises detailed steps summarized as follows. Referring to FIG. 5, which illustrates steps to execute the merchandise anti-counterfeiting and authentication method for the very first authentication process:
Step S501: an encrypted true identity, which is encrypted from a product's True ID and saved in a RFID tag, is read by a tag reader device in a legal retail shop;
Step S502: the encrypted true identity, the tag reader device's device identity information and a consumer's user identity information are sent to a server by the tag reader device for authentication;
Step S503: a dealer's Brand ID is found in a database by the server according to the tag reader device's device identity information;
Step S504: the server depends on the dealer's Brand ID as a decryption key to decipher the encrypted true identity and derive the product's True ID which is further checked with existing data in the database for authentication;
Step S505: the server checks and finds the product's authentic True ID, which is further correlated with a consumer's user identity information, saved, and forwarded to the tag reader device; and
Step S506: a consumer witnesses completion of an authentication process from the tag reader device and realizes the genuineness of a purchased product.
Referring to FIG. 6, which illustrates steps to execute the merchandise anti-counterfeiting and authentication method for the re-authentication process:
   Step S601: an encrypted true identity for the product saved in a RFID tag is read by a tag reader device in a legal retail shop;
   Step S602: the encrypted true identity and the tag reader device's device identity information are sent to the server by the tag reader device for authentication;
   Step S603: a dealer's Brand ID is found in a database by the server according to the tag reader device's device identity information;
   Step S604: the server depends on the dealer's Brand ID as a decryption key to decipher the encrypted true identity and derive the product's True ID which is further checked with existing data in the database for authentication;
   Step S605: the server checks and finds the product's authentic True ID, which has been bound to a specific consumer's user identity information, and issues a short message with a dynamic authentication request therein to the consumer's cell phone according to his/her user identity information;
   Step S606: the server informs a tag reader device of receiving an affirmative reply to the dynamic authentication request from the specific consumer;
   Step S607: another consumer witnesses completion of the re-authentication process from the tag reader device and realizes the genuineness of a purchasable product;
   Step S608: the new consumer as a counter party in a second-hand transaction issues an identity information editing request to the server through the tag reader device;
   Step S609: original user identity information is updated to user identity information of the new consumer, who issued the identity information editing request, by the server directly, correlated with the product's True ID, and saved within a certain period of time after the re-authentication;
   Step S610: the relationship between the original consumer's user identity information and the product's True ID is cancelled by the server directly because a product is bound to a unique consumer's user identity information; and
   Step S611: the new consumer, who is aware of completion of identity information change from the tag reader device, will be authenticated by the server in the future.
In addition, the procedure from Step S608 to Step S611 is available to a consumer, who intends to update his/her user identity information or cell phone number rather than other persons' but make no second-hand transaction, at the tag reader device.
The aforementioned descriptions are provided for explaining the preferred embodiment of the present invention but not for limiting the present invention, and all other equivalent embodiments or modification within the scope of the present invention shall be deemed as covered by the claims of the present invention.

## Claims

1. A merchandise anti-counterfeiting and authentication method, which is applied between a tag reader device and a chip-based tag mounted on a product, and the tag reader device executing the steps comprising:
Reading the chip-based tag for obtaining product identity information saved in the chip-based tag and activating the process of authentication;
Sending the product identity information of the product, a device identity information of the tag reader device which is unique, and an user identity information to an authentication server; and
Receiving an positive authenticating message and completing the process of authentication, wherein the positive authenticating message is sent by the authentication server when the authentication server correctly authenticating the genuineness of the product identity information and the device identity information then saving the user identity information correlating with the product identity information.

2. A merchandise anti-counterfeiting and authentication method as claim 1, wherein the tag reader device further executing the steps comprising:
Reading the chip-based tag again for activating a process of re-authentication, wherein the authentication server re-authenticating the genuineness of the product identity information and the device identity information then sending an authentication request to an user end according to the user identity information; and
Receiving a positive re-authenticating message and completing the process of re-authentication, the positive re-authenticating is sent by the authentication server when the authentication server receiving an affirmative reply of the authentication request from the user end.

3. A merchandise anti-counterfeiting and authentication method as claim 2, wherein the tag reader device further executing the steps comprising:
Activating an identity information editing request based on a new user identity information after the process of re-authentication is complete; and
Receiving an editing success message, wherein the editing success message is sent by the authentication server after the authentication server receiving the identity information editing request and updating the correlation between the product identity information and the user identity information with the new user identity information.

4. A merchandise anti-counterfeiting and authentication method as claim 1 or 2, wherein the product identity information is a unique True ID of the product or a unique Brand ID of a dealer, or a combination of both.

5. A merchandise anti-counterfeiting and authentication method as claim 2, wherein the authentication request is a random dynamic authentication request.

6. A non-transitory computer readable medium of merchandise anti-counterfeiting and authentication, containing program instructions for causing a tag reader device to execute the steps comprising:
Reading the chip-based tag for obtaining product identity information saved in a chip-based tag and activating the process of authentication, wherein the chip-based tag is mounted on a product;
Sending the product identity information of the product, a device identity information of the tag reader device which is unique, and an user identity information to an authentication server; and
Receiving an positive authenticating message and completing the process of authentication, wherein the positive authenticating message is sent by the authentication server when the authentication server correctly authenticating the genuineness of the product identity information and the device identity information then saving the user identity information correlating with the product identity information.

7. A non-transitory computer readable medium of merchandise anti-counterfeiting and authentication as claim 6, wherein the tag reader device further execute the steps comprising:
Reading the chip-based tag again for activating a process of re-authentication, wherein the authentication server re-authenticating the genuineness of the product identity information and the device identity information then sending an authentication request to an user end according to the user identity information; and
Receiving a positive re-authenticating message and completing the process of re-authentication, the positive re-authenticating is sent by the authentication server when the authentication server receiving an affirmative reply of the authentication request from the user end.

8. A non-transitory computer readable medium of merchandise anti-counterfeiting and authentication as claim 7, wherein the tag reader device further execute the steps comprising:
Activating an identity information editing request based on a new user identity information after the process of re-authentication is complete; and
Receiving an editing success message, wherein the editing success message is sent by the authentication server after the authentication server receiving the identity information editing request and updating the correlation between the product identity information and the user identity information with the new user identity information.

9. A merchandise anti-counterfeiting and authentication method as claim 2 or 3, wherein the tag reader device is the user end, and the authentication request sent by the authentication server is received by the tag reader device.

10. A merchandise anti-counterfeiting and authentication method as claim 1, 2 or 3, wherein the user identity information is the-mail box, cell phone number or account of the Google Authenticator.
